# EUROPEAN PATENT APPLICATION

(11) **EP 3 904 721 A1**
(43) Date of publication of application: **03.11.2021**
(21) Application number: 19903666.6
(22) Date of filing: 12.11.2019
(51) Int. Cl.: F16F 9/14, F16J 15/18, F16J 15/3232

(54) **SEAL BODY AND ROTARY DAMPER**

(30) Priority: 28.12.2018 JP 2018246398
(71) Applicant: Somic Management Holdings Inc., Sumida-ku Tokyo 130-0004 (JP)
(72) Inventor: NAKAYA, Kazumasa, Hamamatsu-shi, Shizuoka 435-0032 (JP)
(74) Representative: Zimmermann, Tankred Klaus
(86) International application number: PCT/JP2019/044325
(87) International publication number: WO 2020/137209

(57) **Abstract**

Provided are a seal body capable of ensuring a high liquid tightness even upon operation of a rotor and a rotary damper including the seal bodies. A rotary damper 100 includes a housing 101. The housing 101 includes a rotor 130 in a housing body 102, and is closed with a lid 120. An inner chamber 103 of the housing body 101 is divided into four cells by fixed vanes 104, 105 and movable vanes 136, 137 provided at the rotor 130. The fixed vanes 104, 105 and the movable vanes 136, 137 include, at tip end portions thereof, fixed vane seal bodies 110 and movable vane seal bodies 140. At each of the fixed vane seal bodies 110 and the movable vane seal bodies 140, a cavity formation groove 112a, 112b, 142a, 142b and fluid guide grooves 114, 144 are formed at each side surface 111a, 111b, 141a, 141b.

## Description

### TECHNICAL FIELD

The present invention relates to a seal body used for a rotary damper and a rotary damper including the seal bodies. Such a rotary damper is used as a kinetic energy damping device in a turning mechanism in a four-wheeled or two-wheeled self-propelled vehicle or an industrial mechanical tool.

### BACKGROUND ART

Typically, a rotary damper has been used as a kinetic energy damping device in a turning mechanism in a four-wheeled or two-wheeled self-propelled vehicle or an industrial mechanical tool. For example, in a rotary damper disclosed in Patent Literature 1 below, a pair of separate blocks extending in a wall shape in a radial direction is formed in a tubular casing housing hydraulic oil and formed with bores. Further, a rod-shaped rotor having a pair of blade-shaped vanes is turnably supported. In such a rotary damper, a seal member is, for ensuring liquid tightness of the inside of an operation chamber, provided at each tip end portion of the separate blocks and the vanes. In this case, projecting lips protruding in a raised shape are formed at each tip end portion of the seal members to reduce sliding resistance of the seal member while ensuring the liquid tightness of the inside of the operation chamber.

### CITATION LIST

### PATENT LITERATURE

### PATENT LITERATURE 1: JP-A-9-210110

### SUMMARY OF INVENTION

However, in the seal member disclosed as a seal body in Patent Literature 1 above, the projecting lip is formed of a thin linear protruding body, and for this reason, there is a problem that ensuring of liquid tightness between adjacent operation chambers is unstable. Specifically, in a case where the internal pressure of the operation chamber has increased due to turning of the rotor, the projecting lips are deformed due to such a pressure increase, and for this reason, there is a problem that the liquid tightness is easily degraded.

The present invention has been made for coping with the above-described problems. An object of the present invention is to provide a seal body capable of ensuring a high liquid tightness even upon operation of a rotor and a rotary damper including the seal bodies.

In order to achieve the object described above, the feature of the present invention is a seal body provided in a seal groove formed in a groove shape at a tip end portion of at least one of a fixed vane formed in a wall shape protruding toward a center portion of a cylindrical inner chamber liquid-tightly housing fluid and interfering with a flow of the fluid in a circumferential direction or a movable vane sliding on an inner peripheral portion of the inner chamber to divide an inside of the inner chamber into multiple cells while turning to push the fluid in a rotary damper including a housing having the inner chamber and the fixed vane and a rotor having the movable vane at an outer peripheral portion of a shaft body sliding on the tip end portion of the fixed vane, the seal body having a seal main body which has a fitting outer peripheral surface to be fitted in the seal groove and a seal sliding surface exposed through the seal groove and extending along the seal groove, the seal main body including: a cavity formation groove formed in a groove shape extending along a direction of formation of the seal groove at the fitting outer peripheral surface, opening to an inner side surface extending in a depth direction of the seal groove at an inner surface of the seal groove, and forming a cavity by closing with the inner side surface; and a fluid guide groove formed at the fitting outer peripheral surface and allowing the cavity and the inner chamber to communicate with each other such that the fluid circulates therebetween.

According to the feature of the present invention configured as describe above, in the seal body, the cavity formation groove forming the cavity by closing with the inner side surface of the seal groove and the fluid guide groove allowing the cavity to communicate with the inner chamber in the housing are formed at the fitting outer peripheral surface. Thus, by turning of the rotor, the internal pressure of the cavity increases as the internal pressure of the inner chamber increases. Accordingly, the seal sliding surface of the seal body is pressed against a partner member (the outer peripheral portion of the shaft body and/or the inner peripheral portion of the inner chamber). With this configuration, the seal body according to the present invention can ensure a high liquid tightness even upon operation of the rotor.

Further, another feature of the present invention is the seal body in which the cavity formation groove is, at the fitting outer peripheral surface, formed open to each of two inner side surfaces extending in the depth direction of the seal groove and is closed with the each of the two inner side surfaces.

According to another feature of the present invention configured as described above, in the seal body, the cavity formation groove is, at the fitting outer peripheral surface, formed open to each of the two inner side surfaces extending in the depth direction of the seal groove and is closed with such an inner side surface. With this configuration, liquid tightness of each of inner chambers formed adjacent to each other on both sides of the seal body can be ensured.

Further, still another feature of the present invention is the seal body in which the cavity formation groove is formed on a seal sliding surface side with respect to a center portion of a thickness of the seal body in the depth direction of the seal groove.

According to still another feature of the present invention configured as described above, in the seal body, the cavity formation groove is formed on the seal sliding surface side with respect to the center portion of the thickness of the seal body in the depth direction of the seal groove. Thus, when the internal pressure of the cavity has increased, the seal sliding surface is smoothly and quickly pressed against the partner member (the outer peripheral portion of the shaft body and/or the inner peripheral portion of the inner chamber), and therefore, a high liquid tightness can be ensured. Moreover, in the seal body according to the present invention, the cavity formation groove is formed on the seal sliding surface side with respect to the center portion of the thickness of the seal body in the depth direction of the seal groove. Thus, a great thickness can be ensured on a bottom portion side with respect to the cavity formation groove in the depth direction of the seal groove. Consequently, stability of the seal body in the seal groove can be ensured.

Moreover, still another feature of the present invention is the seal body in which the cavity formation groove is formed with such a depth that a thickness of a seal main body portion formed with the cavity formation groove is equal to or less than a half of a maximum thickness of a portion without the cavity formation groove.

According to still another feature of the present invention configured as described above, in the seal body, the cavity formation groove is formed with such a depth that the thickness of the seal main body portion formed with the cavity formation groove is equal to or less than the half of the maximum thickness of the portion without the cavity formation groove. Thus, when the internal pressure of the cavity has increased, the seal sliding surface is smoothly and quickly pressed against the partner member (the outer peripheral portion of the shaft body and/or the inner peripheral portion of the inner chamber), and therefore, a high liquid tightness can be ensured.

Further, still another feature of the present invention is the seal body in which the cavity formation groove is formed such that a groove width thereof expands toward an opening side.

According to still another feature of the present invention configured as described above, in the seal body, the cavity formation groove is formed such that the groove width thereof expands toward the opening side. Thus, the fluid easily flows between the cavity and the inner chamber through the fluid guide groove, and therefore, pressing of the seal sliding surface against the partner member (the outer peripheral portion of the shaft body and/or the inner peripheral portion of the inner chamber) or cancellation of such pressing can be quickly performed.

Still another feature of the present invention is that in the seal body, the seal sliding surface further includes a lip protruding in a raised shape along a longitudinal direction.

According to still another feature of the present invention configured as described above, the seal body includes, at the seal sliding surface, the lip protruding in the raised shape along the longitudinal direction. In this case, the lip is pressed against the partner member (the outer peripheral portion of the shaft body and/or the inner peripheral portion of the inner chamber) according to an increase in the internal pressure of the cavity in association with an increase in the internal pressure of the inner chamber, and therefore, a high liquid tightness can be ensured.

The present invention can be implemented not only as the invention relating to the seal body but also the invention relating to a rotary damper including the seal bodies.

A rotary damper includes: a housing including a cylindrical inner chamber liquid-tightly housing fluid and a fixed vane formed in a wall shape protruding toward a center portion of the inner chamber and interfering with a flow of the fluid in a circumferential direction; and a rotor including, at an outer peripheral portion of a shaft body sliding on a tip end portion of the fixed vane, a movable vane sliding on an inner peripheral portion of the inner chamber to divide an inside of the inner chamber into multiple cells while turning to push the fluid. In the rotary damper, a seal groove formed in a groove shape is formed at a tip end portion of at least one of the fixed vane or the movable vane, and the seal body according to any one of claims 1 to 6 is fitted in the seal groove. According to this configuration, features and advantageous effects similar to those of the above-described seal body can be expected from the rotary damper.

### BRIEF DESCRIPTION OF DRAWINGS

Fig. 1 shows a schematic perspective view of an entire configuration of a rotary damper according to the present invention.
Fig. 2 shows an exploded perspective view of an assembly of a housing body, seal bodies for the housing body, a rotor, and seal bodies for the rotor, these components forming the rotary damper shown in Fig. 1.
Fig. 3 shows a sectional view of the rotary damper along a 3-3 line of Fig. 1.
Fig. 4 shows a sectional view of the rotary damper along a 4-4 line of Fig. 1.
Figs. 5(A) and 5(B) schematically show an external configuration of a fixed vane seal body shown in Fig. 2, Fig. 5(A) showing a perspective view from a seal sliding surface side and Fig. 5(B) showing a perspective view from a back side.
Fig. 6 shows a sectional view of each sectional shape of the fixed vane seal body and a movable vane seal body shown in Fig. 2.
Figs. 7(A) and 7(B) show partially-enlarged sectional views in a state in which two fixed vane seal bodies shown in Fig. 5 are each fitted in two fixed vane seal grooves and contact an outer peripheral portion of a shaft body.
Fig. 8 shows a schematic view of a cross-sectional structure for describing an operation state of the rotary damper shown in Fig. 1.
Fig. 9 shows a view for describing a state in which the rotor has turned clockwise from the state shown in Fig. 8.
Fig. 10 shows a view for describing a state in which the rotor has turned to the opposite side from the state shown in Fig. 9.
Fig. 11 shows a view for describing a state in which the rotor has turned counterclockwise from the state shown in Fig. 10.
Figs. 12(A) and 12(B) schematically show an external configuration of the movable vane seal body shown in Fig. 2, Fig. 12(A) showing a perspective view from the seal sliding surface side and Fig. 12(B) showing a perspective view from the back side.
Figs. 13(A) and 13(B) show partially-enlarged sectional views in a state in which two movable vane seal bodies shown in Fig. 12 are each fitted in two movable vane seal grooves and contact an inner peripheral portion of an inner chamber.

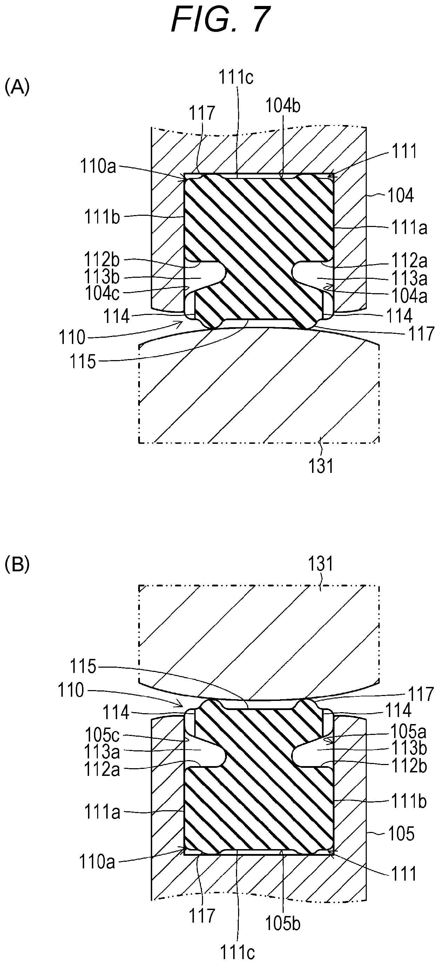

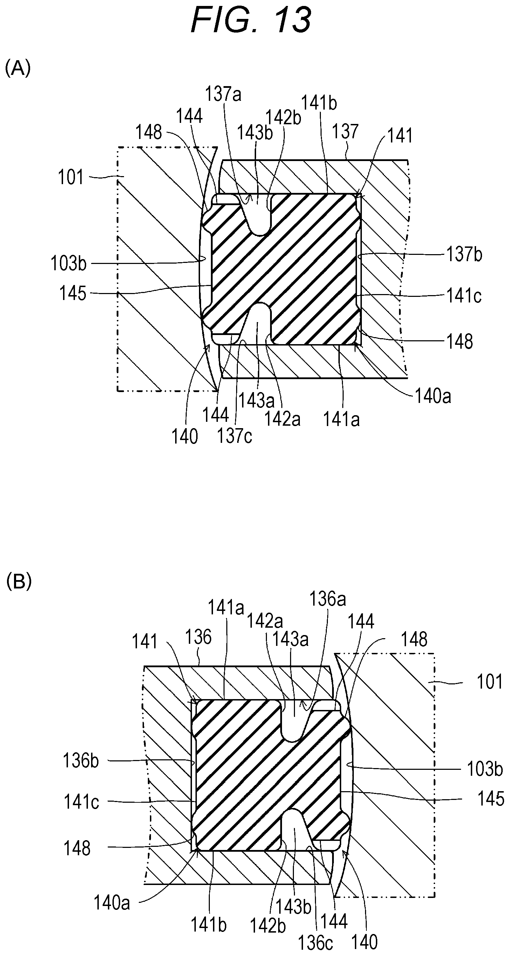

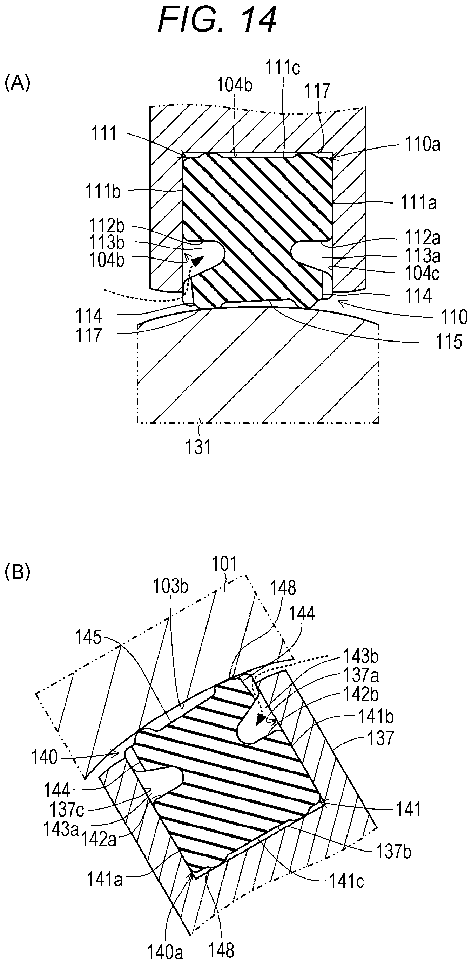

Figs. 14(A) and 14(B) show a state in which fluid flows into one of two cavity formation grooves at each of the fixed vane seal body and the movable vane seal body and a seal sliding surface strongly contacts the outer peripheral portion of the shaft body, Fig. 14(A) showing a partially-enlarged sectional view in a state in which fluid flows into one of two cavity formation grooves in the fixed vane seal body shown in Fig. 7(A) and the seal sliding surface strongly contacts the outer peripheral portion of the shaft body and Fig. 14(B) showing a partially-enlarged sectional view in a state in which fluid flows into one of two cavity formation grooves in the movable vane seal body shown in Fig. 13(A) and the seal sliding surface strongly contacts an inner surface of the inner chamber.
Figs. 15(A) and 15(B) schematically show a sectional shape in a state in which a seal body according to a variation of the present invention is fitted in a seal groove of a movable vane, Fig. 15(A) showing a partially-enlarged sectional view in a normal state in which no fluid actively flows in from a cell and Fig. 15(B) showing a partially-enlarged sectional view in a state in which fluid flows into one of two cavity formation grooves and a seal sliding surface strongly contacts an inner peripheral portion of an inner chamber.
Figs. 16(A) and 16(B) schematically show the shape of a seal body according to another variation of the present invention, Fig. 16(A) showing a perspective view from a back side and Fig. 16(B) showing a longitudinal sectional view of the sectional shape of a seal main body.

### DESCRIPTION OF EMBODIMENTS

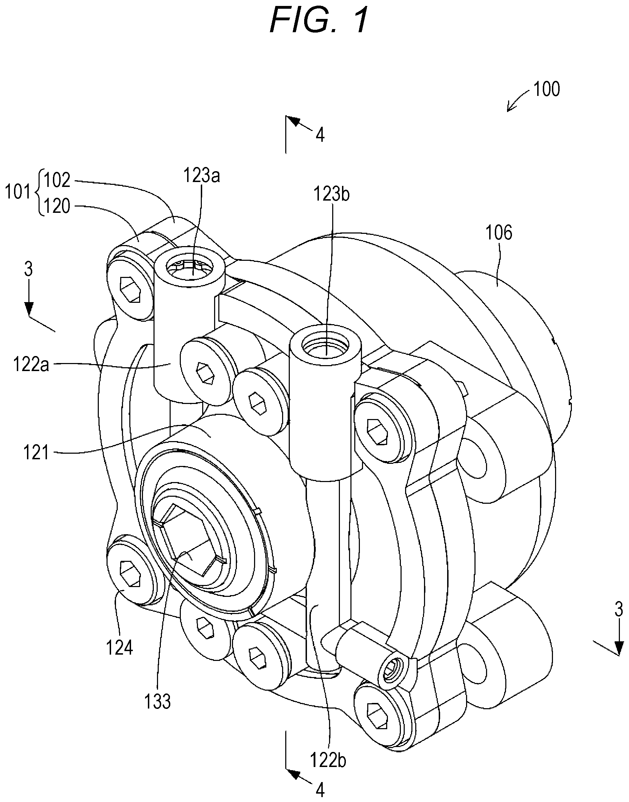

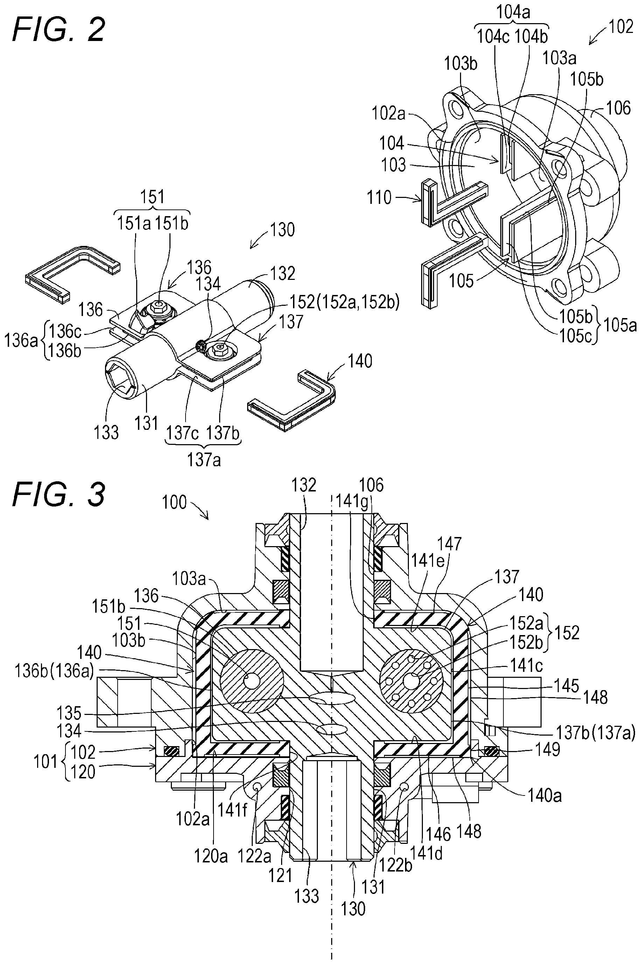

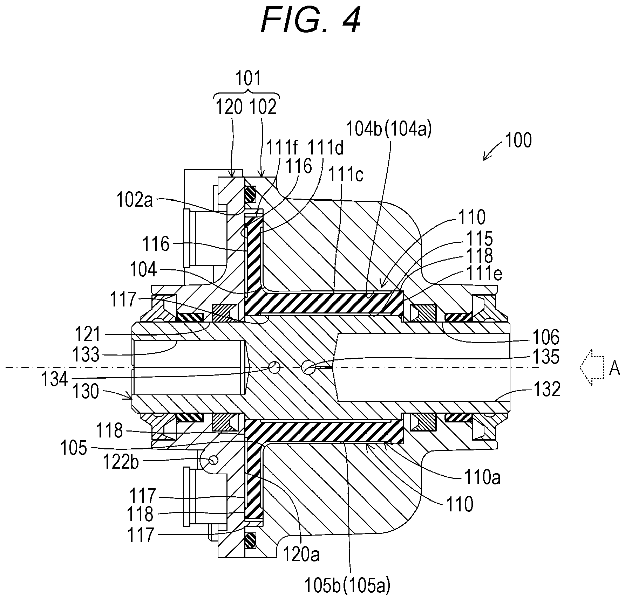

Hereinafter, one embodiment of a seal body according to the present invention and a rotary damper including the seal bodies will be described with reference to the drawings. Fig. 1 shows a schematic perspective view of an entire configuration of a rotary damper 100 according to the present invention. Fig. 2 shows an exploded perspective view of an assembly of a housing body 102, fixed vane seal bodies 110, a rotor 130, and movable vane seal bodies 140 forming the rotary damper 100 shown in Fig. 1. Fig. 3 shows a sectional view of the rotary damper along a 3-3 line of Fig. 1. Fig. 4 is a sectional view of the rotary damper along a 4-4 line of Fig. 1. Note that each figure as a reference in the present specification is schematically shown for the sake of easy understanding of the present invention, and for example, includes exaggerated illustration of some components. Thus, the dimensions, ratios and the like of each component may vary. The rotary damper 100 is a damping device attached to a base end portion of a swing arm configured to support a rear wheel of a two-wheeled self-propelled vehicle (a motorcycle) such that the rear wheel is vertically movable and configured to damp kinetic energy upon vertical movement of the rear wheel.

### (Configuration of Rotary Damper 100)

The rotary damper 100 includes a housing 101. The housing 101 is a component rotatably holding the rotor 130 and forming a body of the rotary damper 100. The rotary damper 100 is made of an aluminum material, an iron material, a zinc material, or various resin materials such as polyamide resin. Specifically, the housing 101 mainly includes the housing body 102 and a lid 120.

The housing body 102 is a component housing later-described movable vanes 136, 137 of the rotor 130 and fluid 160 and rotatably supporting one end portion of a shaft body 131 of the rotor 130. The housing body 102 is formed in such a bottomed cylindrical shape that one end of a tubular body opens large and the other end of the tubular body opens small. More specifically, a cylindrical inner chamber 103 and a cylindrical rotor support portion 106 are formed in the housing body 102. The inner chamber 103 is formed on a large opening 102a side of the tubular body at one end thereof. The rotor support portion 106 is formed open at a bottom portion 103a of the inner chamber 103.

The inner chamber 103 is a space liquid-tightly housing the movable vanes 136, 137 of the rotor 130 and the fluid 160. The inner chamber 103 includes two semicylindrical spaces facing each other through the rotor 130 arranged at a center portion in the housing body 102. Fixed vanes 104, 105 are formed integrally with the housing body 102 in the inner chamber 103.

The fixed vanes 104, 105 are wall-shaped portions dividing, together with the rotor 130, the inside of the inner chamber 103 into cells R1 to R4. The fixed vanes 104, 105 are formed to project inwardly in a raised shape from an inner chamber wall surface 103b along an axis line direction of the housing body 102. In this case, these two fixed vanes 104, 105 are provided at such positions on the inner chamber wall surface 103b that the fixed vanes 104, 105 face each other in a circumferential direction. Seal grooves 104a, 105a are each formed at tip end portions of these fixed vanes 104, 105.

The seal grooves 104a, 105a are portions in which the fixed vane seal bodies 110 are to be fitted. The seal groove 104a, 105a is formed in a recessed groove shape in a state in which a tip end surface facing a center portion of the inner chamber 103 and a tip end surface facing the later-described lid 120 are continuously connected to each other. In the present embodiment, the seal groove 104a, 105a is configured such that a planar bottom portion 104b, 105b forming a deepest portion of the groove shape in a depth direction and two inner side surfaces 104c, 105c extending along the depth direction form a quadrangular sectional shape. In this case, the seal grooves 104a, 105a are, in the present embodiment, formed to have constant depths and groove widths, but may be formed such that the depths and the groove widths vary.

The rotor support portion 106 is a cylindrical portion rotatably supporting one end portion of the shaft body 131 of the rotor 130. The rotor support portion 106 liquid-tightly supports the shaft body 131 of the rotor 130 through a bearing and a seal material such as a packing.

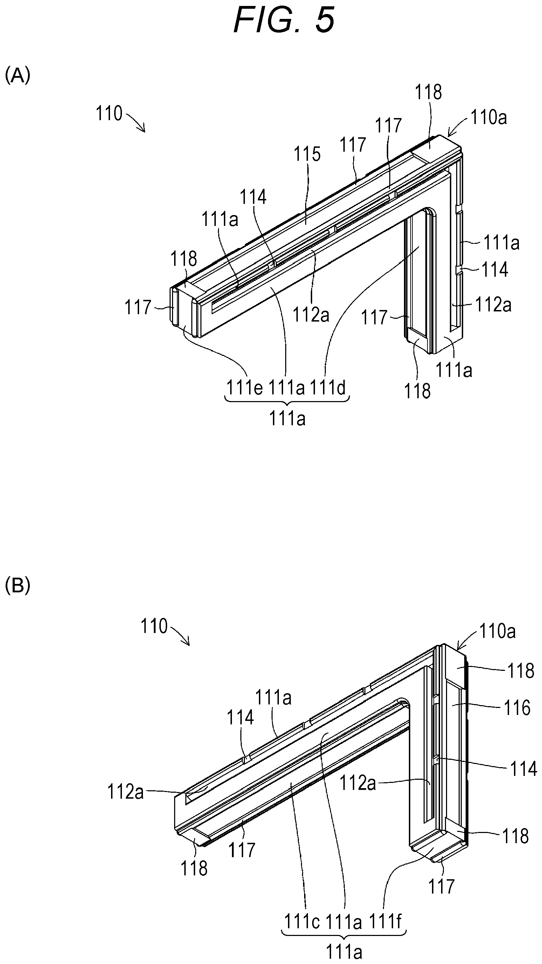

The fixed vane seal bodies 110 are components for ensuring liquid tightness of the cells R1 to R4 formed in the inner chamber 103 as shown in each of Figs. 5, 6, 7(A), and 7(B). The fixed vane seal body 110 includes a seal main body 110a formed in an L-shape as viewed laterally from an elastic material such as a rubber material. More specifically, the fixed vane seal body 110 mainly includes, at an outer surface of the seal main body 110a, a fitting outer peripheral surface 111, a seal sliding surface 115, and a lid-side opposing surface 116.

The fitting outer peripheral surface 111 is a portion to be fitted in the seal groove 104a, 105a. The fitting outer peripheral surface 111 includes six surfaces facing inner surfaces of the seal groove 104a, 105a including the bottom portion 104b, 105b and the inner side surfaces 104c, 105c. Specifically, the fitting outer peripheral surface 111 includes two side surfaces 111a, 111b each facing the inner side surfaces 104c, 105c, back surfaces 111c, 111d as surfaces on the opposite sides of the seal sliding surface 115 and the lid-side opposing surface 116, and longitudinal end surfaces 111e, 111f as two end surfaces of the seal main body 110a in a longitudinal direction thereof. In this case, a cavity formation groove 112a, 112b and fluid guide grooves 114 are formed open at each of the side surfaces 111a, 111b of the surfaces forming the fitting outer peripheral surface 111.

The cavity formation groove 112a, 112b is a recessed portion for forming a cavity 113a, 113b as a closed space between the cavity formation groove 112a, 112b and the inner side surface 104c, 105c. The cavity formation groove 112a, 112b is formed in a groove shape extending along the direction of formation of the seal groove 104a, 105a. In the present embodiment, the cavity formation groove 112a, 112b is formed to bend in an L-shape in accordance with the direction of formation of the seal groove 104a, 105a. In this case, the cavity formation groove 112a, 112b is formed with such a depth that the thickness t1 of a narrowed portion between the cavity formation grooves 112a, 112b each formed at the two side surfaces 111a, 111b of the fitting outer peripheral surface 111 of the seal main body 110a is equal to or less than the half of the maximum thickness T of a portion formed without the cavity formation grooves 112a, 112b.

Moreover, the cavity formation groove 112a, 112b is formed in such a shape that a groove width T_{M} expands toward an opening side facing the inner side surface 104c, 105c. In this case, the groove width T_{M} of the cavity formation groove 112a, 112b may be set such that two side surfaces forming the groove width are both inclined surfaces. In the present embodiment, only a seal-sliding-surface-115-side surface of these two side surfaces is formed as an inclined surface. Further, the cavity formation groove 112a, 112b is formed closer to a seal sliding surface 115 side with respect to the half position (H/2) of a thickness H in a depth direction corresponding to the depth direction of the seal groove 104a, 105a.

The fluid guide groove 114 is a recessed portion allowing communication between the cavity 113a, 113b as an inner space of the cavity formation groove 112a, 112b and the inner chamber 103 such that the fluid 160 circulates between the cavity 113a, 113b and the inner chamber 103. The fluid guide groove 114 is formed in a groove shape extending from the cavity formation groove 112a, 112b and opening at the seal sliding surface 115. The multiple fluid guide grooves 114 are formed at substantially equal intervals along the direction of formation of the seal main body 110a.

The seal sliding surface 115 is a portion to be slid on an outer peripheral portion of the shaft body 131 of the rotor 130. The seal sliding surface 115 is a surface exposed through the seal groove 104a, 105a when the fixed vane seal body 110 is fitted in the seal groove 104a, 105a. The lid-side opposing surface 116 is a portion facing the lid 120 and pressed against the lid 120. The lid-side opposing surface 116 is a surface exposed through the seal groove 104a, 105a when the fixed vane seal body 110 is fitted in the seal groove 104a, 105a. Lips 117 and thick portions 118 are formed at the back surfaces 111c, 111d and the longitudinal end surfaces 111e, 111f including the seal sliding surface 115 and the lid-side opposing surface 116.

The lips 117 are portions to be elastically deformed by pressing against an outer peripheral surface of the shaft body 131 of the rotor 130 and an inner surface 120a of the lid 120. The lip 117 is formed to linearly protrude along the direction of formation of the seal main body 110a. In the present embodiment, the lip 117 is formed such that the sectional shape thereof is a raised arc shape. The lips 117 are formed in two lines at each of the seal sliding surface 115, the lid-side opposing surface 116, the back surfaces 111c, 111d, and the longitudinal end surfaces 111e, 111f.

In this case, a pitch P between the two lines of the lips 117 at each of the seal sliding surface 115, the lid-side opposing surface 116, the back surfaces 111c, 111d, and the longitudinal end surfaces 111e, 111f is formed larger than the thickness t1 of the above-described narrowed portion of the seal main body 110a. That is, the lips 117 formed in two lines are formed at such positions on the seal sliding surface 115 that the two lines overlap with the positions of the formed cavities 113a, 113b.

The thick portion 118 is a portion for stabilizing the position of the fixed vane seal body 110 in the seal groove 104a, 105a. The thick portion 118 is formed to planarly protrude from each of the seal sliding surface 115, the lid-side opposing surface 116, and the back surfaces 111c, 111d. In the present embodiment, the thick portions 118 are formed with the same protrusion height as that of the lip 117 between the two lines of the lips 117 at both end portions of each of the seal sliding surface 115 and the lid-side opposing surface 116 in the longitudinal direction and an end portion of each of the back surfaces 111c, 111d on a side close to the longitudinal end surface 111e, 111f. A material forming the fixed vane seal body 110 includes a rubber material such as nitrile rubber, hydrogenated nitrile rubber, or fluorine-containing rubber.

The lid 120 is a component liquid-tightly closing the inner chamber 103 formed in the housing body 102. The lid 120 is formed in such a shape that one end portion of a rotor support portion 121 formed in a cylindrical shape projects in a flange shape. The rotor support portion 121 is a cylindrical portion supporting the other end portion of the shaft body 131 of the rotor 130 such that such an end portion is rotatable. The rotor support portion 121 liquid-tightly supports the shaft body 131 of the rotor 130 through a bearing and a seal member such as a packing.

Bypass paths 122a, 122b and adjustment needles 123a, 123b are provided at the lid 120. The bypass path 122a is a path allowing the first cell R1 and the second cell R2 in the inner chamber 103 to communicate with each other such that the fluid 160 circulates between these cells and allowing each of the first cell R1 and the second cell R2 to communicate with the outside. The bypass path 122b is a path allowing the second cell R2 and the fourth cell R4 in the inner chamber 103 to communicate with each other such that the fluid 160 circulates between these cells and allowing each of the second cell R2 and the fourth cell R4 to communicate with the outside.

The adjustment needle 123a, 123b is a component for hermetically sealing the bypass path 122a, 122b from the outside and adjusting the flow rate of the circulating fluid 160. The adjustment needle 123a, 123b is turned using a tool (not shown) such as a screwdriver so that the circulation amount of the fluid 160 can be increased/decreased. The lid 120 is attached to an end portion, at which the inner chamber 103 opens, of the housing body 102 with four bolts 124.

The rotor 130 is a component arranged in the inner chamber 103 of the housing 101 to divide the inside of the inner chamber 103 into the first cell R1, the second cell R2, the third cell R3, and the fourth cell R4 as four spaces and turning in the inner chamber 103 to increase/decrease each of the volumes of the first cell R1, the second cell R2, the third cell R3, and the fourth cell R4. The rotor 130 mainly includes the shaft body 131 and the movable vanes 136, 137.

The shaft body 131 is a circular rod-shaped portion supporting the movable vanes 136, 137. The shaft body 131 is made of an aluminum material, an iron material, a zinc material, or various resin materials such as polyamide resin. An accumulator attachment portion 132 is formed at one end portion of the shaft body 131, and a connection portion 133 is provided at the other end portion.

The accumulator attachment portion 132 is a bottomed tubular hole to which a not-shown accumulator is to be attached. The accumulator described herein is equipment configured to compensate for a change in the volume of the fluid 160 in the inner chamber 103 due to expansion or contraction caused by a temperature change. The accumulator is provided with the accumulator communicating with a later-described first unidirectional communication path 135. The connection portion 133 is a portion to be connected to one of two components to which the rotary damper 100 is attached. In the present embodiment, the connection portion 133 is formed as a bottomed tubular hole having a hexagonal sectional shape.

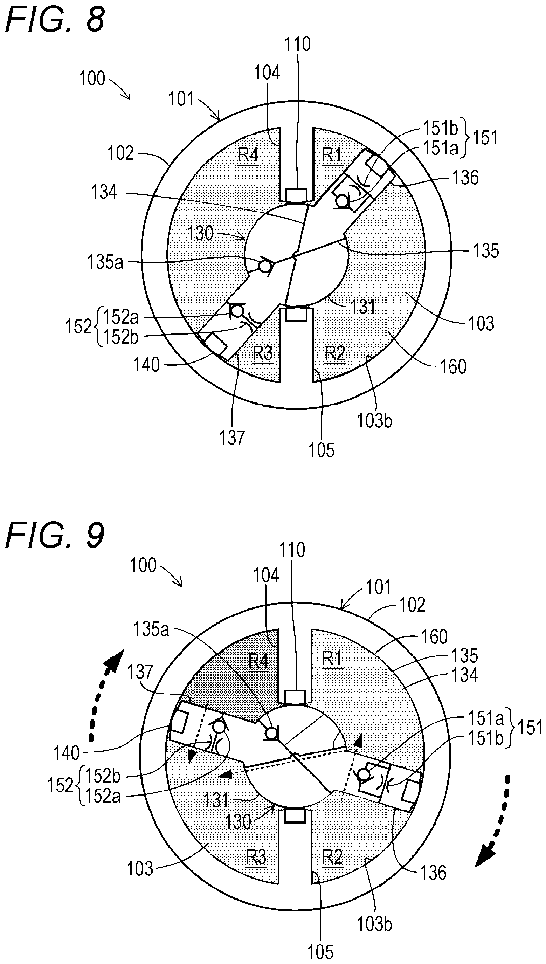

As shown in each of Figs. 8 to 11, each of a first bidirectional communication path 134 and the first unidirectional communication path 135 is formed at the shaft body 131. The first bidirectional communication path 134 is a path allowing bidirectional circulation of the fluid 160 between two cells of which volumes are simultaneously decreased by turning of the movable vanes 136, 137 in one direction and of which volumes are simultaneously increased by turning of the movable vanes 136, 137 in the other direction. In the present embodiment, the first bidirectional communication path 134 is formed to penetrate the shaft body 131 such that the first cell R1 and the third cell R3 of which volumes are simultaneously decreased by counterclockwise turning of the movable vanes 136, 137 as viewed in the figure and of which volumes are simultaneously increased by clockwise turning as viewed in the figure communicate with each other.

The first unidirectional communication path 135 is a path allowing the fluid 160 to flow from one side to the other side between two cells of which volumes are simultaneously increased by turning of the movable vanes 136, 137 in the one direction and of which volumes are simultaneously decreased by turning of the movable vanes 136, 137 in the other direction. In the present embodiment, the first unidirectional communication path 135 is formed to penetrate the shaft body 131 through a one-way valve 135a such that the fluid 160 flows from the second cell R2 to the fourth cell R4, the volumes of the second cell R2 and the fourth cell R4 being simultaneously increased by counterclockwise turning of the movable vanes 136, 137 as viewed in the figure and being simultaneously decreased by clockwise turning as viewed in the figure. Moreover, the first unidirectional communication path 135 also communicates with the accumulator on an upstream side of the one-way valve 135a in the direction of the flow of the fluid 160.

The one-way valve 135a is a valve configured to allow the flow of the fluid 160 from the second cell R2 to the fourth cell R4 in the first unidirectional communication path 135 allowing communication between the second cell R2 and the fourth cell R4 and preventing the fluid 160 from flowing from the fourth cell R4 to the second cell R2.

The movable vanes 136, 137 are components for dividing the inside of the inner chamber 103 into the multiple spaces and liquid-tightly increasing/decreasing each of the volumes of these spaces. Each of the movable vanes 136, 137 includes a plate-shaped body extending in a radial direction of the shaft body 131 (the inner chamber 103). In this case, these two movable vanes 136, 137 are formed to extend in opposite directions (in other words, on the same virtual plane) through the shaft body 131. A seal groove 136a, 137a is formed at a C-shaped (or a backwards C-shaped) tip end portion of the movable vane 136, 137 facing the bottom portion 103a, the inner chamber wall surface 103b, and the inner surface 120a of the lid 120.

The seal groove 136a, 137a is a portion in which the movable vane seal body 140 is to be fitted. The seal groove 136a, 137a is formed in a recessed groove shape in a state in which tip end surfaces facing the bottom portion 103a, the inner chamber wall surface 103b, and the inner surface 120a of the lid 120 are continuously connected to each other. In the present embodiment, the seal groove 136a, 137a is configured such that a planar bottom portion 136b, 137b forming a deepest portion of the groove shape in a depth direction and two inner side surfaces 136c, 137c extending along the depth direction form a quadrangular sectional shape. In this case, the seal grooves 136a, 137a are, in the present embodiment, formed to have constant depths and groove widths, but may be formed such that the depths and the groove widths vary.

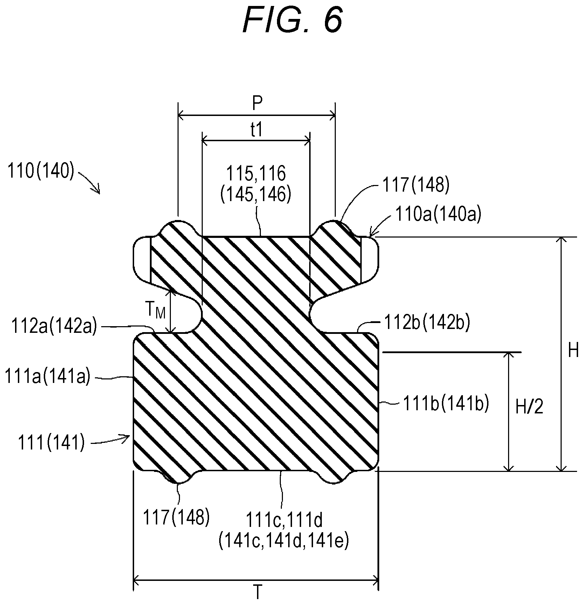

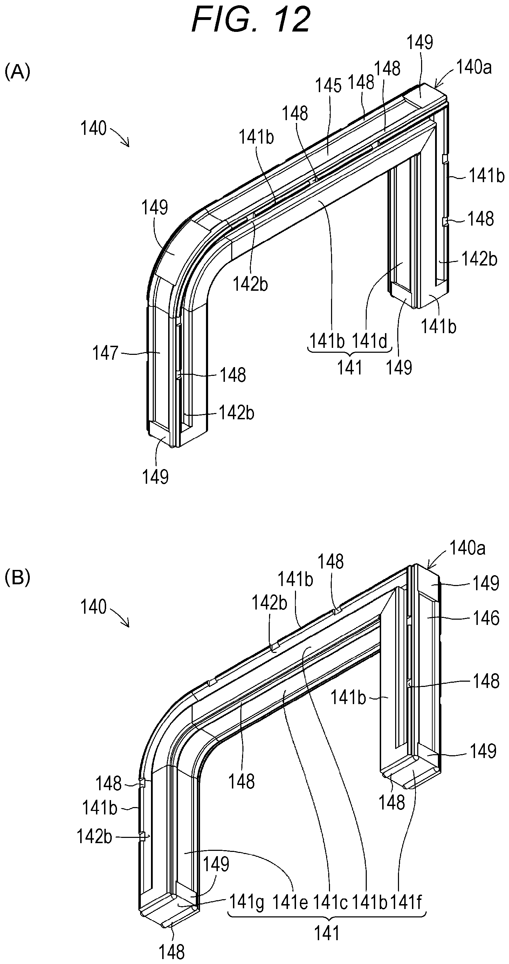

The movable vane seal bodies 140 are, as in the fixed vane seal bodies 110, components for ensuring the liquid tightness of the cells R1 to R4 formed in the inner chamber 103 as shown in each of Figs. 6, 12, 13(A), and 13(B). The movable vane seal body 140 includes a seal main body 140a formed in a C-shape (or a backwards C-shape) as viewed laterally from an elastic material such as a rubber material. More specifically, the movable vane seal body 140 mainly includes, at an outer surface of the seal main body 140a, a fitting outer peripheral surface 141, a seal sliding surface 145, a lid-side opposing surface 146, and a bottom portion opposing surface 147.

The fitting outer peripheral surface 141 is, as in the fitting outer peripheral surface 111, a portion to be fitted in the seal groove 136a, 137a. The fitting outer peripheral surface 141 includes seven surfaces facing inner surfaces of the seal groove 136a, 137a including the bottom portion 136b, 136b and the inner side surfaces 136c, 137c. Specifically, the fitting outer peripheral surface 141 includes two side surfaces 141a, 141b each facing the inner side surfaces 136c, 137c, back surfaces 141c, 141d, 141e as surfaces on the opposite sides of the seal sliding surface 145, the lid-side opposing surface 146, and the bottom portion opposing surface 147, and longitudinal end surfaces 141f, 141g as two end surfaces of the seal main body 140a in a longitudinal direction thereof. In this case, a cavity formation groove 142a, 142b and fluid guide grooves 144 are formed open at each of the side surfaces 141a, 141b of the surfaces forming the fitting outer peripheral surface 141.

The cavity formation groove 142a, 142b is, as in the cavity formation groove 112a, 112b, a recessed portion for forming a cavity 143a, 143b as a closed space between the cavity formation groove 142a, 142b and the inner side surface 136c, 137c. The cavity formation groove 142a, 142b is formed in a groove shape extending along the direction of formation of the seal groove 136a, 137a. In the present embodiment, the cavity formation groove 142a, 142b is formed to bend in a C-shape (or a backwards C-shape) in accordance with the direction of formation of the seal groove 136a, 137a. In this case, the cavity formation groove 142a, 142b is formed with such a depth that the thickness t1 of a narrowed portion between the cavity formation grooves 142a, 142b each formed at the two side surfaces 141a, 141b of the fitting outer peripheral surface 141 of the seal main body 140a is equal to or less than the half of the maximum thickness T of a portion formed without the cavity formation grooves 142a, 142b.

Moreover, the cavity formation groove 142a, 142b is formed in such a shape that a groove width T_{M} expands toward an opening side facing the inner side surface 136c, 137c. In this case, the groove width T_{M} of the cavity formation groove 142a, 142b may be set such that two side surfaces forming the groove width are both inclined surfaces. In the present embodiment, only a seal-sliding-surface-145-side surface of these two side surfaces is formed as an inclined surface. Further, the cavity formation groove 142a, 142b is formed closer to a seal sliding surface 145 side with respect to the half position (H/2) of a thickness H in a depth direction corresponding to the depth direction of the seal groove 136a, 137a.

The fluid guide groove 144 is, as in the fluid guide groove 114, a recessed portion allowing communication between the cavity 143a, 143b as an inner space of the cavity formation groove 142a, 142b and the inner chamber 103 such that the fluid 160 circulates between the cavity 143a, 143b and the inner chamber 103. The fluid guide groove 144 is formed in a groove shape extending from the cavity formation groove 142a, 142b and opening at the seal sliding surface 145. The multiple fluid guide grooves 144 are formed at substantially equal intervals along the direction of formation of the seal main body 140a.

The seal sliding surface 145 is a portion to be slid on the inner chamber wall surface 103b of the inner chamber 103. The seal sliding surface 145 is a surface exposed through the seal groove 136a, 137a when the movable vane seal body 140 is fitted in the seal groove 136a, 137a. The lid-side opposing surface 146 is a portion facing the inner surface 120a of the lid 120 and pressed against the inner surface 120a. The lid-side opposing surface 146 is a surface exposed through the seal groove 136a, 137a when the movable vane seal body 140 is fitted in the seal groove 136a, 137a. The bottom portion opposing surface 147 is a portion facing the bottom portion 103a of the inner chamber 103 and pressed against the bottom portion 103a. The bottom portion opposing surface 147 is a surface exposed through the seal groove 136a, 137a when the movable vane seal body 140 is fitted in the seal groove 136a, 137a. Lips 148 and thick portions 149 are formed at the back surfaces 141c, 141d, 141e and the longitudinal end surfaces 141f, 141g including the seal sliding surface 145, the lid-side opposing surface 146, and the bottom portion opposing surface 147.

The lips 148 are, as in the lips 117, portions to be elastically deformed by pressing against the inner chamber wall surface 103b of the inner chamber 103, the inner surface 120a of the lid 120, and the bottom portion 103a. The lip 148 is formed to linearly protrude along the direction of formation of the seal main body 140a. In the present embodiment, the lip 148 is formed such that the sectional shape thereof is a raised arc shape. The lips 148 are formed in two lines at each of the seal sliding surface 145, the lid-side opposing surface 146, the back surfaces 141c, 141d, 141e, and the longitudinal end surfaces 141f, 141g.

In this case, a pitch P between the two lines of the lips 148 at each surface is formed larger than the thickness t1 of the above-described narrowed portion of the seal main body 140a. That is, the lips 148 formed in two lines are formed at such positions on the seal sliding surface 145 that the two lines overlap with the positions of the formed cavities 143a, 143b.

The thick portion 149 is, as in the thick portion 118, a portion for stabilizing the position of the movable vane seal body 140 in the seal groove 136a, 137a. The thick portion 149 is formed to planarly protrude from each of the seal sliding surface 145, the lid-side opposing surface 146, the back surfaces 141c, 141d, 141e, and the longitudinal end surfaces 141f, 141g. In the present embodiment, the thick portions 149 are formed with the same protrusion height as that of the lip 148 between the two lines of the lips 148 at both end portions of each of the seal sliding surface 145, the lid-side opposing surface 146, the bottom portion opposing surface 147, and the back surfaces 141d, 141e in the longitudinal direction. A material forming the movable vane seal body 140 includes a rubber material such as nitrile rubber, hydrogenated nitrile rubber, or fluorine-containing rubber.

With these configurations, the movable vanes 136, 137 cooperate with the fixed vanes 104, 105 to liquid-tightly form the first cell R1, the second cell R2, the third cell R3, and the fourth cell R4 as the four spaces in the inner chamber 103. More specifically, in the inner chamber 103, the first cell R1 is formed by the fixed vane 104 and the movable vane 136, the second cell R2 is formed by the movable vane 136 and the fixed vane 105, the third cell R3 is formed by the fixed vane 105 and the movable vane 137, and the fourth cell R4 is formed by the movable vane 137 and the fixed vane 104. That is, the first cell R1, the second cell R2, the third cell R3, and the fourth cell R4 are sequentially formed adjacent to each other along the circumferential direction in the inner chamber 103.

A second bidirectional communication path 151 and a second unidirectional communication path 152 are each formed at the movable vanes 136, 137. The second bidirectional communication path 151 is formed at the movable vane 136 dividing the first cell R1 and the second cell R2 from each other such that the first cell R1 of the first and third cells R1, R3 as two communication cells communicating with each other through the first bidirectional communication path 134 and the second cell R2 of the second and fourth cells R2, R4 as two unidirectional communication cells communicating with each other through the first unidirectional communication path 135 communicate with each other.

The second bidirectional communication path 151 is configured to allow the fluid 160 to flow from the second cell R2 as the unidirectional communication cell to the first cell R1 as the communication cell and allow the fluid 160 to flow from the first cell R1 to the second cell R2 in a limited manner. Specifically, as shown in Fig. 8, the second bidirectional communication path 151 is configured such that a one-way valve 151a and a throttle valve 151b are arranged in parallel.

The one-way valve 151a is configured as a valve configured to allow the fluid 160 to flow from the second cell R2 to the first cell R1 and prevent the fluid 160 from flowing from the first cell R1 to the second cell R2. The throttle valve 151b is configured as a valve capable of achieving bidirectional circulation while limiting the flow of the fluid 160 between the first cell R1 and the second cell R2. In this case, the phrase "limiting the flow of the fluid 160" in the throttle valve 151b means that the fluid 160 is less likely to flow under the same conditions (e.g., a pressure and the viscosity of the fluid) as compared to the fluidity of the fluid 160 in the one-way valve 151a.

The second unidirectional communication path 152 is formed at the movable vane 137 dividing the third cell R3 and the fourth cell R4 from each other such that the fluid 160 flows in a limited manner from the fourth cell R4 as the unidirectional communication cell to the third cell R3 as the communication cell, the third cell R3 being the communication cell not communicating with the second bidirectional communication path 151 and the fourth cell R4 being the unidirectional communication cell not communicating with the second bidirectional communication path 151. Specifically, the second unidirectional communication path 152 is configured such that a one-way valve 152a configured to allow the fluid 160 to flow from the fourth cell R4 to the third cell R3 and a throttle valve 152b configured to limit the flow rate of the fluid 160 are arranged in series. In this case, the phrase "limit the flow rate of the fluid 160" in the throttle valve 152b means that the fluid 160 is less likely to flow under the same conditions (e.g., a pressure and the viscosity of the fluid) as compared to the fluidity of the fluid 160 in the one-way valve 152a.

The fluid 160 is a substance providing resistance to the movable vanes 136, 137 turning in the inner chamber 103 such that a damper function acts on the rotary damper 100. The inside of the inner chamber 103 is filled with the fluid 160. The fluid 160 is made of a substance in a liquid form, a gel form, or a semi-solid form, the substance having flowability with a viscosity corresponding to the specifications of the rotary damper 100. In this case, the viscosity of the fluid 160 is selected as necessary according to the specifications of the rotary damper 100. In the present embodiment, the fluid 160 is made of oil such as mineral oil or silicone oil.

The rotary damper 100 configured as described above is provided between two components movably coupled to each other. Of the rotary damper 100, a side close to a frame as a basic framework of the two-wheeled self-propelled vehicle (not shown) is a fixed side, and the housing 101 is attached to such a fixed side, for example. Of the rotary damper 100, a side close to the base end portion of the swing arm supporting the rear wheel of the two-wheeled self-propelled vehicle such that the rear wheel is vertically movable is a movable side, and the rotor 130 is attached to such a movable side.

### (Manufacturing of Rotary Damper 100)

Next, the process of manufacturing a main portion of the rotary damper 100 will be described. A worker manufacturing the rotary damper 100 first prepares, for a single rotary damper 100, a single housing body 102, two fixed vane seal bodies 110, a single lid 120, a single rotor 130, and two movable vane seal bodies 140. In this case, attachment holes or the like are formed by cutting after fixed vanes 104, 105 and a rotor support portion 106 have been formed integrally with the housing body 102 by forging. In this manner, the housing body 102 is manufactured. Moreover, the lid 120 is manufactured in such a manner that attachment holes or the like are formed by cutting after an external shape has been formed by forging.

For the rotor 130, a shaft body 131 and movable vanes 136, 137 are formed integrally by forging, and thereafter, portions to which the movable vane seal bodies 140, one-way valves 151a, 152a, and throttle valves 151b, 152b are to be attached are formed by cutting. Then, the one-way valves 151a, 152a and the throttle valves 151b, 152b forming a second bidirectional communication path 151 and a second unidirectional communication path 152 are arranged at the movable vanes 136, 137. The fixed vane seal bodies 110 and the movable vane seal bodies 140 are formed by a typical formation method such as compression molding, transfer molding, or injection molding.

Note that the housing body 102, the lid 120, and the rotor 130 may be formed by forging or cutting, or can be formed using injection molding and cutting in a case where each of these components is made of a resin material.

Next, the worker attaches the two fixed vane seal bodies 110 to the fixed vanes 104, 105. Specifically, the worker fits each of the two fixed vane seal bodies 110 in a corresponding one of seal grooves 104a, 105a of the fixed vanes 104, 105. In this manner, fitting outer peripheral surfaces 111 of the two fixed vane seal bodies 110 are fitted in the seal grooves 104a, 105a in a state in which seal sliding surfaces 115 are exposed through the seal grooves 104a, 105a, and accordingly, cavity formation grooves 112a, 112b are closed by inner side surfaces 104c, 105c of the seal grooves 104a, 105a. Accordingly, cavities 113a, 113b are formed on both sides of each fixed vane seal body 110. Note that the fixed vane seal bodies 110 may be fixed to the seal grooves 104a, 105a with an adhesive.

Next, the worker attaches the two movable vane seal bodies 140 to the movable vanes 136, 137. Specifically, the worker fits each of the two movable vane seal bodies 140 in a corresponding one of seal grooves 136a, 137a of the movable vanes 136, 137. In this manner, fitting outer peripheral surfaces 141 of the two movable vane seal bodies 140 are fitted in the seal grooves 136a, 137a in a state in which seal sliding surfaces 145 are exposed through the seal grooves 136a, 137a, and accordingly, cavity formation grooves 142a, 142b are closed by inner side surfaces 136c, 137c of the seal grooves 136a, 137a. Accordingly, cavities 143a, 143b are formed on both sides of each movable vane seal body 140. Note that the movable vane seal bodies 140 may be fixed to the seal grooves 136a, 137a with an adhesive.

Next, the worker assembles the rotor 130 into the housing body 102. Specifically, the worker arranges a bearing and a seal material on the rotor support portion 106 of the housing body 102. Thereafter, the worker inserts and attaches the rotor 130 into the housing body 102 from an accumulator attachment portion 132 side. In this case, the worker inserts the rotor 130 into the housing body 102 against elastic force of each of the fixed vane seal bodies 110 and the movable vane seal bodies 140.

Next, the worker attaches the lid 120 to the housing body 102. Specifically, the worker arranges a bearing and a seal material on a rotor support portion 121 of the lid 120. Thereafter, the worker inserts the rotor 130 into the rotor support portion 121 while assembling the lid 120 with bolts 124 with the lid 120 being placed onto an opening 102a of the housing body 102. In this case, the worker assemblies the lid 120 against the elastic force of each of the fixed vane seal bodies 110 and the movable vane seal bodies 140 with the lid 120 being pressed against the opening 102a of the housing body 102.

In this manner, the inside of the inner chamber 103 of the housing 101 is divided into four cells R1 to R4 by the fixed vanes 104, 105, the shaft body 131, and the movable vanes 136, 137. In this case, each of the cavities 113a, 113b formed two by two at the fixed vane seal bodies 110 communicates with the inner chamber 103 through fluid guide grooves 114. Specifically, the two cavities 113a, 113b at the fixed vane seal body 110 attached to the fixed vane 104 each communicate with the first cell R1 and the fourth cell R4. Moreover, the two cavities 113a, 113b at the fixed vane seal body 110 attached to the fixed vane 105 each communicate with the second cell R2 and the third cell R3.

Each of the cavities 143a, 143b formed two by two at the movable vane seal bodies 140 communicates with the inner chamber 103 through fluid guide grooves 144. Specifically, the two cavities 143a, 143b at the movable vane seal body 140 attached to the movable vane 136 each communicate with the first cell R1 and the second cell R2. Moreover, the two cavities 143a, 143b at the movable vane seal body 140 attached to the movable vane 137 each communicate with the third cell R3 and the fourth cell R4.

Next, the worker injects fluid 160 into the housing body 102 through bypass paths 122a, 122b of the lid 120, and releases air. Next, adjustment needles 123a, 123b are prepared and attached to the lid 120, and an adjustment process such as adjustment of rotary force of the rotor 130 is performed. In this manner, the rotary damper 100 is completed. A final process such as the above-described adjustment process does not directly relate to the present invention, and for this reason, description thereof will be omitted.

### (Operation of Rotary Damper 100)

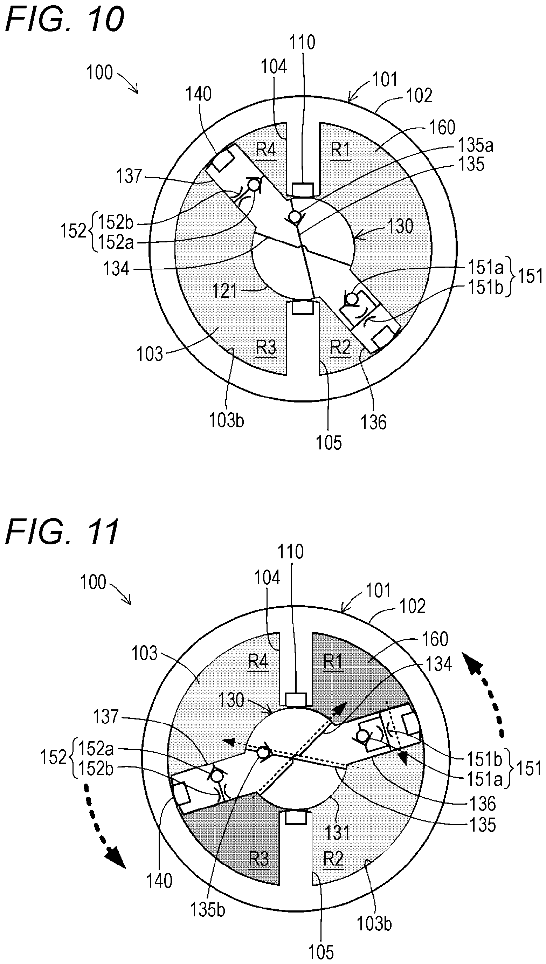

Next, operation of the rotary damper 100 configured as described above will be described. For the sake of easy understanding of motion of the rotor 130 and the fluid 160 in the inner chamber 103 in description of such operation, description will be made using Figs. 8 to 11 schematically showing the inside of the inner chamber 103. Note that for assisting understanding of behavior of the fluid 160 in association with motion of the movable vanes 136, 137, Figs. 8 to 11 schematically show the inside of the rotary damper 100 as viewed from a dashed arrow A of Fig. 4. In Figs. 8 to 11, a state in which the pressure of the fluid 160 is relatively higher than those of the other cells is indicated by a dark hatched area, and a state in which the pressure is relatively lower is indicated by a light hatched area. Moreover, in Figs. 9 and 11, the direction of turning of the movable vanes 136, 137 is indicated by thick dashed arrows, and the direction of the flow of the fluid 160 is indicated by thin dashed arrows.

First, in a state in which the self-propelled vehicle runs on a flat land and the swing arm is lowered, the rotary damper 100 is, as shown in Fig. 8, in a state in which the movable vane 136 is closest to the fixed vane 104 and the movable vane 137 is closest to the fixed vane 105. That is, in the rotary damper 100, each of the volumes of the first cell R1 and the third cell R3 is minimum, and each of the volumes of the second cell R2 and the fourth cell R4 is maximum.

In a case where the rear wheel of the self-propelled vehicle runs over, e.g., a step from the above-described state, the swing arm is lifted. Accordingly, in the rotary damper 100, the rotor 130 turns clockwise as viewed in the figure as shown in Fig. 9. That is, in the rotary damper 100, the movable vane 136 turns toward the fixed vane 105, and the movable vane 137 turns toward the fixed vane 104. Accordingly, in the rotary damper 100, each of the volumes of the first cell R1 and the third cell R3 increases, and each of the volumes of the second cell R2 and the fourth cell R4 decreases.

In this case, the first unidirectional communication path 135 brings the fourth cell R4 of the second and fourth cells R2, R4 with the maximum volumes into a state in which "an inflow from the second cell R2 is allowed and an outflow to the second cell R2 is prevented," and the second unidirectional communication path 152 brings the fourth cell R4 into a state in which "an inflow from the third cell R3 is prevented and an outflow to the third cell R3 is allowed in a throttled manner." Thus, the fluid 160 flows out of the fourth cell R4 only into the third cell R3 through the throttle valve 152b. Accordingly, the fourth cell R4 is brought into a high-pressure state due to a pressure increase, and therefore, there is no inflow of the fluid 160 from the second cell R2 communicating with the fourth cell R4 through the first unidirectional communication path 135.

In this case, part of the fluid 160 in the fourth cell R4 flows, through each of the fluid guide grooves 114, 144, into each of the cavities 113b, 143b which communicate with the fourth cell R4 and which are formed at the fixed vane seal body 110 and the movable vane seal body 140 provided at the fixed vane 104 and the movable vane 137 and sealing the fourth cell R4, and the pressures of the cavities 113b, 143b increase. Accordingly, due to an increase in the pressure of each cavity 113b, 143b, the seal sliding surfaces 115, 145 forming these pressure-increased cavities 113b, 143b are elastically deformed and pressed against an outer peripheral portion side of the shaft body 131 of the rotor 130 and an inner chamber wall surface 103b side of the housing body 102 as shown in each of Figs. 14(A) and 14(B).

That is, sealing force is improved at the seal sliding surfaces 115, 145 sealing the pressure-increased fourth cell R4 as the pressure of the fourth cell R4 increases. Thus, the fixed vane seal body 110 and the movable vane seal body 140 sealing the fourth cell R4 can improve the liquid tightness of the pressure-increased fourth cell R4. In this case, at the fixed vane seal body 110 and the movable vane seal body 140 sealing the fourth cell R4, pressing force of the fitting outer peripheral surfaces 111, 141 against the seal grooves 104a, 105a, 136a, 137a also increases due to an increase in the pressures of the cavities 113b, 143b. Thus, the liquid tightness of the pressure-increased fourth cell R4 can be improved.

Note that such a pressure state of the fourth cell R4 decreases as the movable vane 137 approaches the fixed vane 104 after having been temporarily in the high-pressure state in association with rotation of the movable vane 137. Thus, pressing force of the seal sliding surfaces 115, 145 forming the cavities 113b, 143b against the outer peripheral portion of the shaft body 131 of the rotor 130 and the inner chamber wall surface 103b of the housing body 102 decreases as the fluid 160 flows out of the fourth cell R4 into the third cell R3 through the second unidirectional communication path 152, and the seal sliding surfaces 115, 145 return to original shapes (see Figs. 7(A) and 13(A)).

At the same time, the first unidirectional communication path 135 brings the second cell R2 into a state in which "an inflow from the fourth cell R4 is prevented and an outflow to the fourth cell R4 is allowed," and the second bidirectional communication path 151 brings the second cell R2 into a state in which "an inflow from the first cell R1 is allowed in a throttled manner and an outflow to the first cell R1 is allowed." In this case, the fourth cell R4 is in the high-pressure state as described above. Thus, the fluid 160 flows out of the second cell R2 into the first cell R1 through the second bidirectional communication path 151. In this case, the fluid 160 smoothly flows from the second cell R2 through the one-way valve 151a of the second bidirectional communication path 151, and therefore, a pressure increase is suppressed and a non-high-pressure state is maintained. Note that the non-high-pressure state described herein is a state relative to the pressures of the other cells.

On the other hand, the first bidirectional communication path 134 brings the third cell R3 of the first and third cells R1, R3 with the minimum volumes into a state in which "an inflow from the first cell R1 is allowed and an outflow to the first cell R1 is allowed," and the second unidirectional communication path 152 brings the third cell R3 into a state in which "an inflow from the fourth cell R4 is allowed in a throttled manner and an outflow to the fourth cell R4 is prevented." Thus, the fluid 160 flows into the third cell R3 from each of the first cell R1 and the fourth cell R4, and therefore, the non-high-pressure state is maintained.

At the same time, the first bidirectional communication path 134 brings the first cell R1 into a state in which "an inflow from the third cell R3 is allowed and an outflow to the third cell R3 is allowed," and the second bidirectional communication path 151 brings the first cell R1 into a state in which "an inflow from the second cell R2 is allowed and an outflow to the second cell R2 is allowed in a throttled manner." Thus, the fluid 160 flows into the first cell R1 from the second cell R2 and flows out of the first cell R1 into the third cell R3, and therefore, the non-high-pressure state is maintained.

In this case, in the fixed vane seal body 110 and the movable vane seal body 140 sealing the first cell R1 in the non-high-pressure state, there is no active flow of the fluid 160 into the cavities 113a, 143a in the course of increasing the volume of the first cell R1, and therefore, the seal sliding surfaces 115, 145 forming the cavities 113a, 143a are not strongly pressed against the outer peripheral portion of the shaft body 131 of the rotor 130 and the inner chamber wall surface 103b of the housing body 102. As in the first cell R1, in the fixed vane seal body 110 and the movable vane seal body 140 sealing the third cell R3, there is no active flow of the fluid 160 into the cavities 113a, 143a in the course of increasing the volume of the third cell R3, and therefore, the seal sliding surfaces 115, 145 forming the cavities 113a, 143a are not strongly pressed against the outer peripheral portion of the shaft body 131 of the rotor 130 and the inner chamber wall surface 103b of the housing body 102.

In the fixed vane seal body 110 and the movable vane seal body 140 sealing the second cell R2 in the non-high-pressure state, there is no active flow of the fluid 160 into the cavities 113b, 143b in the course of decreasing the volume of the second cell R2, and therefore, the seal sliding surfaces 115, 145 forming the cavities 113b, 143b are not strongly pressed against the outer peripheral portion of the shaft body 131 of the rotor 130 and the inner chamber wall surface 103b of the housing body 102.

As described above, in a case where the rotor 130 turns clockwise as viewed in the figure, the limitation of the outflow of the fluid 160 is only on the fourth cell R4 and the fourth cell R4 is in the high-pressure state in the rotary damper 100, and therefore, damping force is lower than damping force upon later-described counterclockwise rotation as viewed in the figure. Thereafter, as shown in Fig. 10, the rotary damper 100 is in a state in which the movable vane 136 is closest to the fixed vane 105 and the movable vane 137 is closest to the fixed vane 104. That is, in the rotary damper 100, each of the volumes of the first cell R1 and the third cell R3 is maximum, and each of the volumes of the second cell R2 and the fourth cell R4 is minimum. Note that such a state is a state in which the swing arm of the self-propelled vehicle is lifted.

Next, in a case where the swing arm is lowered, the rotor 130 turns counterclockwise as viewed in the figure in the rotary damper 100 as shown in Fig. 11. That is, in the rotary damper 100, the movable vane 136 turns toward the fixed vane 104, and the movable vane 137 turns toward the fixed vane 105. Accordingly, in the rotary damper 100, each of the volumes of the first cell R1 and the third cell R3 decreases, and each of the volumes of the second cell R2 and the fourth cell R4 increases.

In this case, the first bidirectional communication path 134 brings the first cell R1 of the first and third cells R1, R3 with the maximum volumes into a state in which "an inflow from the third cell R3 is allowed and an outflow to the third cell R3 is allowed," and the second bidirectional communication path 151 brings the first cell R1 into a state in which "an inflow from the second cell R2 is allowed and an outflow to the second cell R2 is allowed in a throttled manner." In this case, the volumes of the third cell R3 and the first cell R1 are about to decrease by turning of the movable vane 137. Thus, the fluid 160 flows out of the first cell R1 only into the second cell R2 through the throttle. Accordingly, the first cell R1 is brought into a high-pressure state due to a pressure increase.

At the same time, the first bidirectional communication path 134 brings the third cell R3 into a state in which "an inflow from the first cell R1 is allowed and an outflow to the first cell R1 is allowed, and the second unidirectional communication path 152 brings the third cell R3 into a state in which "an inflow from the fourth cell R4 is allowed in a throttled manner and an outflow to the fourth cell R4 is prevented." Thus, the fluid 160 flows out of the third cell R3 only into the first cell R1. Accordingly, the third cell R3 is, together with the first cell R1, brought into a high-pressure state due to a pressure increase.

In this case, part of the fluid 160 in the first cell R1 flows, through each of the fluid guide grooves 114, 144, into each of the cavities 113a, 143a which communicate with the first cell R1 and which are formed at the fixed vane seal body 110 and the movable vane seal body 140 sealing the first cell R1 in the high-pressure state, and therefore, the internal pressures of the cavities 113a, 143a increase. Accordingly, due to an increase in the pressure of each cavity 113a, 143a, the seal sliding surfaces 115, 145 forming these pressure-increased cavities 113a, 143a are elastically deformed and pressed against the outer peripheral portion side of the shaft body 131 of the rotor 130 and the inner chamber wall surface 103b side of the housing body 102.

That is, sealing force is improved at the seal sliding surfaces 115, 145 sealing the pressure-increased first cell R1 as the pressure of the first cell R1 increases. Thus, the fixed vane seal body 110 and the movable vane seal body 140 sealing the first cell R1 can improve the liquid tightness of the pressure-increased first cell R1. In this case, at the fixed vane seal body 110 and the movable vane seal body 140 sealing the first cell R1, the pressing force of the fitting outer peripheral surfaces 111, 141 against the seal grooves 104a, 105a, 136a, 137a also increases due to an increase in the pressures of the cavities 113a, 143a. Thus, the liquid tightness of the pressure-increased fourth cell R4 can be improved.

Part of the fluid 160 in the third cell R3 flows, through each of the fluid guide grooves 114, 144, into each of the cavities 113a, 143a which communicate with the third cell R3 and which are formed at the fixed vane seal body 110 and the movable vane seal body 140 sealing the third cell R3 in the high-pressure state as in the first cell R1, and therefore, the internal pressures of the cavities 113a, 143a increase. Accordingly, due to an increase in the pressure of each cavity 113a, 143a, the seal sliding surfaces 115, 145 forming these pressure-increased cavities 113a, 143a are elastically deformed and pressed against the outer peripheral portion side of the shaft body 131 of the rotor 130 and the inner chamber wall surface 103b side of the housing body 102.

That is, sealing force is improved at the seal sliding surfaces 115, 145 sealing the pressure-increased third cell R3 as the pressure of the third cell R3 increases. Thus, the fixed vane seal body 110 and the movable vane seal body 140 sealing the third cell R3 can improve the liquid tightness of the pressure-increased first cell R1. In this case, at the fixed vane seal body 110 and the movable vane seal body 140 sealing the third cell R3, the pressing force of the fitting outer peripheral surfaces 111, 141 against the seal grooves 104a, 105a, 136a, 137a also increases due to an increase in the pressures of the cavities 113a, 143a. Thus, the liquid tightness of the pressure-increased fourth cell R4 can be improved.

Note that such a pressure state of each of the first cell R1 and the third cell R3 decreases as the movable vanes 136, 137 each approach the fixed vanes 104, 105 after having been temporarily in the high-pressure state in association with rotation of the movable vanes 136, 137. Thus, pressing force of the seal sliding surfaces 115, 145 forming the cavities 113a, 143a against the outer peripheral portion of the shaft body 131 of the rotor 130 and the inner chamber wall surface 103b of the housing body 102 decreases as the fluid 160 flows out of the first cell R1 and the third cell R3 into the second cell R2, and the seal sliding surfaces 115, 145 return to the original shapes (see Figs. 7(A), 7(B), 13(A), and 13(B)).

On the other hand, the second bidirectional communication path 151 brings the second cell R2 of the second and fourth cells R2, R4 with the minimum volumes into a state in which "an inflow from the first cell R1 is allowed in a throttled manner and an outflow to the first cell R1 is allowed," and the first unidirectional communication path 135 brings the second cell R2 into a state in which "an inflow from the fourth cell R4 is prevented and an outflow to the fourth cell R4 is allowed." Thus, the fluid 160 flows into the second cell R2 from the first cell R1 through the throttle and flows out of the second cell R2 into the fourth cell R4, and therefore, the non-high-pressure state is maintained. That is, regardless of the direction of rotation of the movable vanes 136, 137, the non-high-pressure state is constantly maintained in the second cell R2.

At the same time, the first unidirectional communication path 135 brings the fourth cell R4 into a state in which "an inflow from the second cell R2 is allowed and an outflow to the second cell R2 is prevented," and the second unidirectional communication path 152 brings the fourth cell R4 into a state in which "an inflow from the third cell R3 is prevented and an outflow to the third cell R3 is allowed in a throttled manner." Thus, the fluid 160 flows only into the fourth cell R4 from the second cell R2, and therefore, the non-high-pressure state is maintained.

In this case, in the fixed vane seal body 110 and the movable vane seal body 140 sealing the second cell R2 in the non-high-pressure state, there is no active flow of the fluid 160 into the cavities 113b, 143b in the course of increasing the volume of the second cell R2, and therefore, the seal sliding surfaces 115, 145 forming the cavities 113b, 143b are not strongly pressed against the outer peripheral portion of the shaft body 131 of the rotor 130 and the inner chamber wall surface 103b of the housing body 102. As in the second cell R2, in the fixed vane seal body 110 and the movable vane seal body 140 sealing the fourth cell R4, there is no active flow of the fluid 160 into the cavities 113b, 143b in the course of increasing the volume of the fourth cell R4, and therefore, the seal sliding surfaces 115, 145 forming the cavities 113b, 143b are not strongly pressed against the outer peripheral portion of the shaft body 131 of the rotor 130 and the inner chamber wall surface 103b of the housing body 102.

As described above, in a case where the rotor 130 turns counterclockwise as viewed in the figure, the limitation of the outflow of the fluid 160 is on the first cell R1 and the third cell R3 and the first cell R1 and the third cell R3 are in the high-pressure state in the rotary damper 100, and therefore, the damping force is higher than the damping force upon the above-described clockwise rotation as viewed in the figure. In this case, the damping force of the rotary damper 100 is also higher than that upon the above-described clockwise rotation as viewed in the figure because the number of cells in the high-pressure state is twice as much as that upon the above-described clockwise rotation as viewed in the figure.

Thereafter, as shown in Fig. 8, in the rotary damper 100, the movable vane 136 is closest to the fixed vane 104, and the movable vane 137 is closest to the fixed vane 105. Thus, each of the volumes of the first cell R1 and the third cell R3 is minimum, and each of the volumes of the second cell R2 and the fourth cell R4 is maximum.

Note that for the sake of easy understanding of an operation state of the rotary damper 100 in description of operation above, the case where the movable vanes 136, 137 turn from the state in which the movable vane 136 is closest to the fixed vane 104 and the movable vane 137 is closest to the fixed vane 105 or the state in which the movable vane 136 is closest to the fixed vane 105 and the movable vane 137 is closest to the fixed vane 104 has been described. However, in the rotary damper 100, the movable vane 136, 137 may turn toward a fixed vane 104 side or a fixed vane 105 side from a state in which the movable vane 136, 137 is positioned in the middle between the fixed vane 104 and the fixed vane 105, needless to say.

As understood from description of the operation method above, according to the above-described embodiment, in the rotary damper 100, the cavity formation grooves 112a, 112b, 142a, 142b forming the cavities 113a, 113b, 143a, 143b by closing with the inner side surfaces 104c, 105c, 136c, 137c of the seal grooves 104a, 105a, 136a, 137a and the fluid guide grooves 114, 144 allowing the inner chamber 103 in the housing 101 to communicate with the cavities 113a, 113b, 143a, 143b are formed at each of the fitting outer peripheral surfaces 111, 141. Thus, by turning of the rotor 130 in the rotary damper 100, the internal pressures of the cavities 113a, 113b, 143a, 143b are increased as the internal pressure of the inner chamber 103 increases. Accordingly, the fixed vane seal bodies 110 are pressed against the outer peripheral portion of the shaft body 131 as a partner member, and the movable vane seal bodies 140 are pressed against the inner chamber wall surface 103b of the inner chamber 103 as a partner member. Thus, the rotary damper 100 according to the present invention can ensure a high liquid tightness even upon operation of the rotor 130.

Further, implementation of the present invention is not limited to the above-described embodiment, and various changes can be made without departing from the gist of the present invention. Note that in description of each variation, the same reference numerals are used to represent elements similar to those of the above-described embodiment, and overlapping description thereof will be omitted.

For example, in the above-described embodiment, the rotary damper 100 is configured such that the fixed vane seal bodies 110 according to the present invention are each provided at the fixed vanes 104, 105 and the movable vane seal bodies 140 according to the present invention are provided at the movable vanes 136, 137. However, it may only be required that the rotary damper 100 is configured such that the fixed vane seal bodies 110 and/or the movable vane seal bodies 140, i.e., the seal bodies according to the present invention, are provided at least either of the fixed vanes 104, 105 or the movable vanes 136, 137. In this case, in the rotary damper 100, seal bodies according to a typical technique, i.e., seal bodies without cavity formation grooves and fluid guide grooves, may be provided at the fixed vanes 104, 105 or the movable vanes 136, 137 without the seal bodies according to the present invention.

In the above-described embodiment, the cavity formation groove 112a, 112b, 142a, 142b and the fluid guide grooves 114, 144 are provided at each of the side surfaces 111a, 111b, 141a, 141b of the fixed vane seal body 110 and the movable vane seal body 140. However, it may only be required that the cavity formation groove 112a, 112b, 142a, 142b and the fluid guide grooves 114, 144 are provided at least one of the side surface 111a, 141a or the side surface 111b, 141b of each of the fixed vane seal body 110 and the movable vane seal body 140.

In the above-described embodiment, in the fixed vane seal body 110, the sectional shape of the fitting outer peripheral surface 111 is such a shape that the side surfaces 111a, 111b stand on both end portions of the single back surface 111c (or 111d). In the movable vane seal body 140, the sectional shape of the fitting outer peripheral surface 141 is such a shape that the side surfaces 141a, 141b stand on both end portions of the single back surface 141c (or 141d, 141e). However, it may only be required that the sectional shape of the fitting outer peripheral surface 111 is a shape corresponding to and fitting the inner surfaces of the seal groove 104a, 105a, 136a, 137a. Thus, the sectional shape of the fitting outer peripheral surface 111, 141 may be, for example, an arc shape, a trapezoidal shape, or a triangular shape (a shape without the back surfaces 111c, 111d, 141c, 141d, 141e) pointed toward a bottom portion 104b, 105b, 136b, 137b side.

In the above-described embodiment, the cavity formation grooves 112a, 112b, 142a, 142b are formed on the seal sliding surface 115, 145 side with respect to the half position (H/2) of the thickness H in the depth direction corresponding to the depth direction of the seal groove 104a, 105a, 136a, 137a. With this configuration, the seal sliding surfaces 115, 145 of the fixed vane seal body 110 and the movable vane seal body 140 are smoothly and quickly pressed against the outer peripheral portion of the shaft body 131 and/or the inner chamber wall surface 103b of the inner chamber 103 as the partner members when the internal pressures of the cavities 113a, 113b, 143a, 143b have increased, and therefore, a high liquid tightness can be ensured. At the fixed vane seal body 110 and the movable vane seal body 140, the cavity formation grooves 112a, 112b, 142a, 142b are formed on the seal sliding surface 115, 145 side with respect to the half position (H/2) of the thickness H. Thus, greater thicknesses can be ensured on the bottom portion 104b, 105b, 136b, 137b side with respect to the cavity formation grooves 112a, 112b, 142a, 142b. Thus, stability of each seal body in the seal groove 104a, 105a, 136a, 137a can be ensured. However, the cavity formation groove 112a, 112b, 142a, 142b may be formed over the half position (H/2) of the thickness H in the depth direction corresponding to the depth direction of the seal groove 104a, 105a, 136a, 137a or be formed on a back surface 111c, 111d, 141c, 141d, 141e side with respect to the half position (H/2).

In the above-described embodiment, the depth of the cavity formation groove 112a, 112b, 142a, 142b is such a depth that the thickness t1 of the narrowed portion between the cavity formation grooves 112a, 112b, 142a, 142b each formed at the two side surfaces 111a, 111b, 141a, 141b of the fitting outer peripheral surface 111, 141 of the seal main body 110a, 140a is equal to or less than the half of the maximum thickness T of the portion without the cavity formation grooves 112a, 112b, 142a, 142b. However, the depth of the cavity formation groove 112a, 112b, 142a, 142b may be such a depth that the thickness t1 of the narrowed portion between the cavity formation grooves 112a, 112b, 142a, 142b each formed at the two side surfaces 111a, 111b, 141a, 141b of the fitting outer peripheral surface 111, 141 of the seal main body 110a, 140a exceeds the half of the maximum thickness T of the portion without the cavity formation grooves 112a, 112b, 142a, 142b.

In the above-described embodiment, the cavity formation groove 112a, 112b, 142a, 142b is formed in such a shape that the groove width T_{M} expands toward the opening side facing the inner side surface 104c, 105c, 136c, 137c. With this configuration, the fluid 160 easily flows between each of the fixed vane seal bodies 110 and the movable vane seal bodies 140 and the inner chamber 103 through the fluid guide grooves 114, 144, and therefore, pressing of the seal sliding surface 115, 145 against the partner member (the outer peripheral portion of the shaft body 131 and/or the inner chamber wall surface 103b of the inner chamber 103) or cancellation of such pressing can be promptly performed. However, the cavity formation groove 112a, 112b, 142a, 142b may be formed such that the groove width T_{M} is constant or decreased toward the opening side facing the inner side surface 104c, 105c, 136c, 137c.

In the above-described embodiment, each of the fixed vane seal bodies 110 and the movable vane seal bodies 140 is provided with the two-lined lips 117, 148. With this configuration, sticking force of the fixed vane seal bodies 110 and the movable vane seal bodies 140 to the partner members (the outer peripheral portion of the shaft body 131 and/or the inner chamber wall surface 103b of the inner chamber 103) and the seal grooves 104a, 105a, 136a, 137a is improved so that the liquid tightness can be improved. However, the fixed vane seal body 110 and the movable vane seal body 140 may be formed without the lips 117, 148.

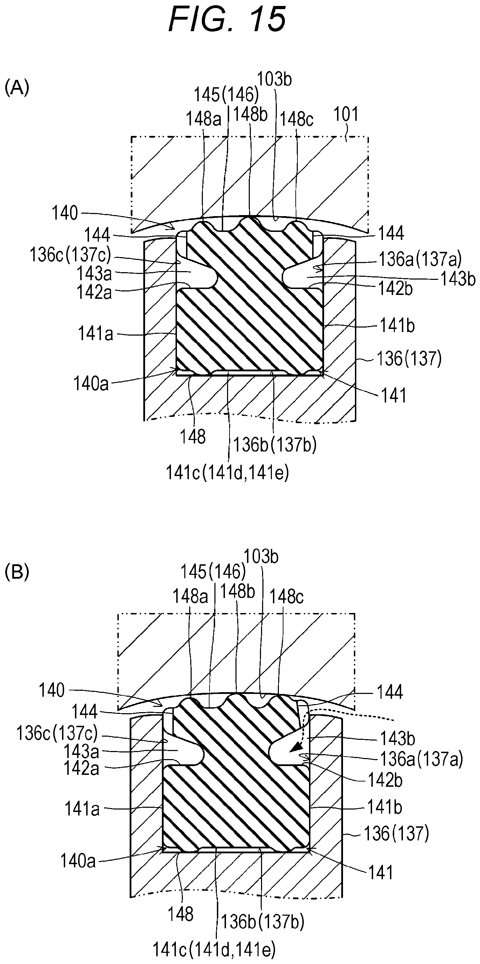

As shown in each of Figs. 15(A) and 15(B), three lips 148a, 148b, 148c may be, as the lips 148, formed to extend parallel with each other along the longitudinal direction of the seal main body 140a. In this case, the center lip 148b may be formed with the same protrusion amount as those of the other adjacent lips 148a, 148c or a smaller protrusion amount than those of the other adjacent lips 148a, 148c, but is preferably formed with a greater protrusion amount than those of the other lips 148a, 148c. According to this configuration, when the pressure of the cavity 143a or the cavity 143b has increased, the lips 148a, 148b, 148c can promptly press the seal sliding surface 145 on a lip 148a side or a lip 148c side against the inner chamber wall surface 103b of the inner chamber 103 as the partner member about the center lip 148b as a supporting point or can promptly cancel such pressing. Note that needless to say, the lips 117 may include three lips as in the lips 148a, 148b, 148c.

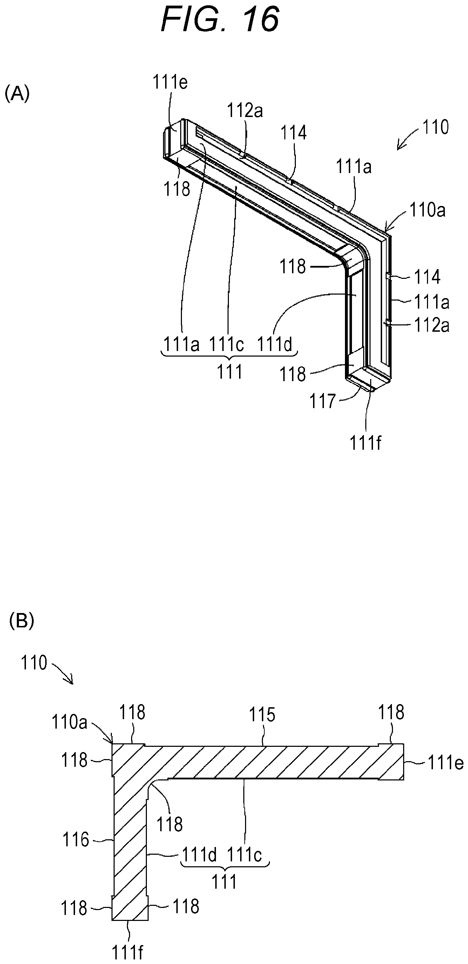

In the above-described embodiment, the thick portion 118, 149 is formed to planarly protrude from each of the seal sliding surface 115, the lid-side opposing surface 116, the back surfaces 111c, 111d, the seal sliding surface 145, the lid-side opposing surface 146, the bottom portion opposing surface 147, and the back surfaces 141d, 141e. However, each of the fixed vane seal body 110 and the movable vane seal body 140 may be formed without the thick portions 118, 149. As shown in Fig. 16(A) and 16(B), the thick portions 118, 149 may be formed at corner portions at the back of the seal main body 110a, 140a, specifically a corner portion between the back surface 111c and the back surface 111d, a corner portion between the back surface 141c and the back surface 141d, and a corner portion between the back surface 141c and the back surface 141e. According to such a configuration, the thick portions 118, 149 center the fixed vane seal body 110 and the movable vane seal body 140 in the seal grooves 104a, 105a, 136a, 137a so that the fixed vane seal body 110 and the movable vane seal body 140 can be stably arranged with less position shift.

In the above-described embodiment, the housing body 102 is formed in the bottomed tubular shape at the housing 101. However, the housing 101 may be configured such that the housing body 102 is formed in a tubular shape and both end portions of the tubular body are closed with plate-shaped bodies equivalent to the lid 120.

In the rotary damper 100, the inside of the single inner chamber 103 is divided into the first cell R1, the second cell R2, the third cell R3, and the fourth cell R4 as the four cells by the fixed vanes 104, 105 and the movable vanes 136, 137. However, it may only be required that the rotary damper 100 has at least two cells of which volumes are simultaneously decreased by turning of the movable vanes 136, 137 in one direction and of which volumes are simultaneously increased by turning of the movable vanes 136, 137 in the other direction and has at least two cells of which volumes are simultaneously increased by turning of the movable vanes 136, 137 in the one direction and of which volumes are simultaneously decreased by turning of the movable vanes 136, 137 in the other direction.

That is, it may only be required that the rotary damper 100 has, in the single inner chamber 103, at least two cells of which volumes are simultaneously increased by turning of the rotor 130 in one direction and at least two cells, which are different from the above-described two cells, of which volumes are simultaneously decreased. Thus, the rotary damper 100 may have, in the single inner chamber 103, three cells of which volumes are simultaneously increased by turning of the rotor 130 in one direction and three cells, which are different from the above-described three cells, of which volumes are simultaneously decreased.

In the above-described embodiment, the rotary damper 100 is configured such that the accumulator attachment portion 132 is provided at the rotor 130 and the accumulator (not shown) is provided at the accumulator attachment portion 132. With this configuration, the rotary damper 100 can compensate for the change in the volume of the fluid 160 due to expansion or contraction caused by the temperature change, and the configuration of the rotary damper 100 can be reduced in size. However, the accumulator may be provided at a location other than the rotor 130, such as outside the housing 101. In a case where the change in the volume of the fluid 160 does not need to be taken into consideration, the rotary damper 100 may be formed without the accumulator and the accumulator attachment portion 132.

In the above-described embodiment, in the rotary damper 100, the housing 101 is on the fixed side, and the rotor 130 is on the movable side. However, turning of the rotor 130 is relative to the housing 101 in the rotary damper 100. Thus, the housing 101 may be on the movable side and the rotor 130 may be on the fixed side in the rotary damper 100, needless to say.

In the above-described embodiment, the second bidirectional communication path 151 and the second unidirectional communication path 152 are provided at the movable vanes 136, 137. However, the second bidirectional communication path 151 and the second unidirectional communication path 152 may be provided at the fixed vanes 104, 105.

In the above-described embodiment, the case where the rotary damper 100 is attached to the swing arm of the two-wheeled self-propelled vehicle has been described. However, the rotary damper 100 can be, upon use thereof, attached to a location (e.g., a seat opening/closing mechanism) other than the swing arm in the two-wheeled self-propelled vehicle, a vehicle (a suspension mechanism, a seat mechanism, or an opening/closing door in a four-wheeled self-propelled vehicle) other than the two-wheeled self-propelled vehicle, or a mechanical device, an electrical device, or a tool other than the self-propelled vehicle.

### LIST OF REFERENCE SIGNS

- t1: Thickness between two cavity formation grooves formed at opposing positions
- T: Maximum thickness of portion without cavity formation grooves
- H: Thickness of seal main body in seal groove depth direction
- T_{M}: Groove width of cavity formation groove
- P: Pitch (interval) between lips
- 100: Rotary damper
- 101: Housing
- 102: Housing body
- 102a: Opening
- 103: Inner chamber
- 103a: Bottom portion
- 103b: Inner chamber wall surface
- 104, 105: Fixed vane
- 104a, 105a: Seal groove
- 104b, 105b: Bottom portion
- 104c, 105c: Inner side surface
- 106: Rotor support portion
- 110: Fixed vane seal body
- 110a: Seal main body
- 111: Fitting outer peripheral surface
- 111a, 111b: Side surface
- 111c, 111d: Back surface
- 111e, 111f: Longitudinal end surface
- 112a, 112b: Cavity formation groove
- 113a, 113b: Cavity
- 114: Fluid guide groove
- 115: Seal sliding surface
- 116: Lid-side opposing surface
- 117: Lip
- 118: Thick portion
- 120: Lid
- 120a: Inner surface
- 121: Rotor support portion
- 122a, 122b: Bypass path
- 123a, 123b: Adjustment needle
- 124: Bolt
- 130: Rotor
- 131: Shaft body
- 132: Accumulator attachment portion
- 133: Connection portion
- 134: First bidirectional communication path
- 135: First unidirectional communication path
- 135a: One-way valve
- 136, 137: Movable vane
- 136a, 137a: Seal groove
- 136b, 137b: Bottom portion
- 136c, 137c: Inner side surface
- 140: Movable vane seal body
- 140a: Seal main body
- 141: Fitting outer peripheral surface
- 141a, 141b: Side surface
- 141c, 141d, 141e: Back surface
- 141f, 141g: Longitudinal end surface
- 142a, 142b: Cavity formation groove
- 143a, 143b: Cavity
- 144: Fluid guide groove
- 145: Seal sliding surface
- 146: Lid-side opposing surface
- 147: Bottom portion opposing surface
- 148, 148a, 148b, 148c: Lip
- 149: Thick portion
- 151: Second bidirectional communication path
- 151a: One-way valve
- 151b: Throttle valve
- 152: Second unidirectional communication path
- 152a: One-way valve
- 152b: Throttle valve
- 160: Fluid

## Claims

1. A seal body provided in a seal groove formed in a groove shape at a tip end portion of at least one of a fixed vane formed in a wall shape protruding toward a center portion of a cylindrical inner chamber liquid-tightly housing fluid and interfering with a flow of the fluid in a circumferential direction or a movable vane sliding on an inner peripheral portion of the inner chamber to divide an inside of the inner chamber into multiple cells while turning to push the fluid in a rotary damper including a housing having the inner chamber and the fixed vane and a rotor having the movable vane at an outer peripheral portion of a shaft body sliding on the tip end portion of the fixed vane,
the seal body having a seal main body which has a fitting outer peripheral surface to be fitted in the seal groove and a seal sliding surface exposed through the seal groove and extending along the seal groove, the seal main body comprising:
a cavity formation groove formed in a groove shape extending along a direction of formation of the seal groove at the fitting outer peripheral surface, opening to an inner side surface extending in a depth direction of the seal groove at an inner surface of the seal groove, and forming a cavity by closing with the inner side surface; and
a fluid guide groove formed at the fitting outer peripheral surface and allowing the cavity and the inner chamber to communicate with each other such that the fluid circulates therebetween.

2. The seal body according to claim 1, wherein
the cavity formation groove is, at the fitting outer peripheral surface, formed open to each of two inner side surfaces extending in the depth direction of the seal groove and is closed with the each of the two inner side surfaces.

3. The seal body according to claim 1 or 2, wherein
the cavity formation groove is formed on a seal sliding surface side with respect to a center portion of a thickness of the seal body in the depth direction of the seal groove.

4. The seal body according to any one of claims 1 to 3, wherein
the cavity formation groove is formed with such a depth that a thickness of a seal main body portion formed with the cavity formation groove is equal to or less than a half of a maximum thickness of a portion without the cavity formation groove.

5. The seal body according to any one of claims 1 to 4, wherein
the cavity formation groove is formed such that a groove width thereof expands toward an opening side.

6. The seal body according to any one of claims 1 to 5, wherein
the seal sliding surface includes a lip protruding in a raised shape along a longitudinal direction.

7. A rotary damper comprising:
a housing including a cylindrical inner chamber liquid-tightly housing fluid and a fixed vane formed in a wall shape protruding toward a center portion of the inner chamber and interfering with a flow of the fluid in a circumferential direction; and
a rotor including, at an outer peripheral portion of a shaft body sliding on a tip end portion of the fixed vane, a movable vane sliding on an inner peripheral portion of the inner chamber to divide an inside of the inner chamber into multiple cells while turning to push the fluid,
wherein a seal groove formed in a groove shape is formed at a tip end portion of at least one of the fixed vane or the movable vane, and the seal body according to any one of claims 1 to 6 is fitted in the seal groove.
